# EUROPEAN PATENT SPECIFICATION

(11) **EP 2 251 173 B1**
(45) Date of publication and mention of the grant of the patent: **29.08.2018**
(21) Application number: 09715555.0
(22) Date of filing: 24.02.2009
(51) Int. Cl.: B29C 33/20, B22D 17/22, B22D 17/26, B29C 45/64, B29C 45/00, B29C 45/17

(54) **MOLD HOLDING MEMBER AND MOLD CLAMPING DEVICE**
HALTEELEMENT FÜR GIESSFORM UND FORMKLEMMVORRICHTUNG
ÉLÉMENT DE SUPPORT DE MOULE ET DISPOSITIF DE SERRAGE DE MOULE

(30) Priority: 28.02.2008 JP 2008047329
(43) Date of publication of application: 17.11.2010
(73) Proprietor: Sumitomo Heavy Industries, Ltd., Tokyo 141-6025 (JP)
(72) Inventor: MIZUHARA, Tadashi, Chiba-shi Chiba 263-0001 (JP)
(74) Representative: Carstens, Dirk Wilhelm
(86) International application number: PCT/JP2009/053268
(87) International publication number: WO 2009/107605

(56) References cited:
- WO-A1-2005/084909
- WO-A1-2006/115141
- JP-A- 2001 001 381
- JP-A- 2003 025 378
- JP-A- 2005 205 819
- JP-A- 2005 205 819
- JP-T- 2004 512 203
- US-A1- 2007 187 871
- US-A1- 2007 269 549

## Description

### Technical Field

The present invention relates to a mold holding member and a mold clamping device.

### Background Art

Conventionally, in a molding machine, for example, an injection molding machine, a molded article is molded by filling up a cavity space of a mold device with resin heated and melted in a heating cylinder, under high pressure, and then cooling and solidifying the resin in the cavity space.

To this end, the mold device includes a fixed mold and a movable mold, and mold closing, mold clamping or mold opening is carried out by advancing or retreating the movable mold by an operation of a mold clamping device, thereby bringing the movable mold into contact with the fixed mold or separating the movable mold from the fixed mold. The mold clamping device includes a fixed platen for mounting the fixed mold, a toggle support disposed facing the fixed platen, tie bars constructed so as to extend between the fixed platen and the toggle support, a movable platen disposed so as to be able to advance or retreat along the tie bars and for mounting the movable mold, a toggle mechanism which is disposed between the toggle support and the movable platen and advances or retreats the movable mold by advancing or retreating the movable platen, and the like.

Incidentally, if the mold clamping is performed at a given mold clamping force by advancing the movable mold by an operation of the mold clamping device, a force which draws the fixed platen to a base plate side through the tie bars is generated. At this time, since the tie bars are disposed at four corners of the fixed platen, four corners of the fixed platen are drawn to the base plate side, whereas the central portion of the fixed platen is subjected to the mold clamping force through the movable mold and the fixed mold, thereby being pushed in the opposite direction. Therefore, the fixed platen is deformed to form a concave face in a mounting face of the fixed mold, and the fixed mold is deformed accordingly.

As a result, a gap is formed between the fixed mold and the movable mold, and resin enters into the gap, thereby forming burrs, or leakage of resin through the gap occurs. Therefore, the quality of a molded article is lowered.

Therefore, there is provided a mold clamping device in which in order to prevent the fixed platen from being deformed, ribs extending in a radial fashion from a central portion to peripheral border portions are formed at the fixed platen (refer to, for example, JP-A-2005-205819 or US 2007/0269549 A1). US 2007/0269549 A1 discloses a mold clamping apparatus of a mold having a side wall portion of cantilever shape. An injection molding machine and injection molding method both using the mold clamping apparatus are also provided. The mold clamping apparatus comprises a side pusher comprising a pair of supports respectively arranged between adjacent two tie bars out of a plurality of tie bars at positions symmetrical to each other and slidably supported to the tie bars, a moving and positioning means linking the supports to a fixed platen or movable platen and moving the supports to be positioned at a predetermined position and a lateral clamping means provided on each of the pair of supports to push a side face of a fixed mold or movable mold.

US 2007/0187871 A1 discloses a mold-supporting apparatus which includes a mold-mounting portion having a mold-mounting surface to which a mold is mounted; and a rear surface portion having reaction-force-receiving portions at corners thereof, the reaction-force-receiving portions receiving reaction force from a reaction force applying member, wherein a central region of the mold-mounting portion and a central region of the rear surface portion are connected together by means of a central connection member, and an outer peripheral portion of the mold-mounting portion and an outer peripheral portion of the rear surface portion are connected together by means of an outer peripheral portion connection member. The stationary platen is a hollow box-shaped member integrally formed through casting. Notably, various portions of the box-shaped member are not separate members, and are integrally formed portions of the box-shaped member.

### Disclosure of Invention

### Technical Problem

However, in the past, in the mold clamping device, since the ribs are formed in a radial fashion, stress generated at the peripheral border portions of the fixed platen in accordance with the fact that four corners of the fixed platen are drawn to the base plate side is easily transmitted to the central portion of the fixed platen through the ribs, so that the fixed mold is easily deformed by a corresponding amount.

Therefore, the quality of a molded article is lowered.

The present invention has an object to provide a mold holding member and a mold clamping device, in which the quality of a molded article can be improved by solving the problems of the mold clamping device in the past.

### Technical Solution

To this end, a mold holding member is provided as set forth in claim 1. Preferred embodiments of the present invention may be gathered from the dependent claims. A mold clamping device is provided as set forth in claim 10.

### Advantageous Effects

Since the tie bar holding portion and the reinforcement portion are formed so as to project from the die body, deformation of the mold die is suppressed, so that deformation of a mold holding member and a mold can be suppressed. Therefore, since a gap is not formed between the molds, the problems of a molding material entering into the gap and thereby forming burrs or of leakage of a molding material through the gap occurring does not arise. Consequently, the quality of a molded article can be improved.

### Brief Description of Drawings

Fig. 1 is a diagram showing a main section of an injection molding machine in a first embodiment of the present invention.
Fig. 2 is a first perspective view of a fixed die in the first embodiment of the present invention.
Fig. 3 is a first cross-sectional view of a fixed platen in the first embodiment of the present invention.
Fig. 4 is a second cross-sectional view of the fixed platen in the first embodiment of the present invention.
Fig. 5 is a perspective view of the fixed platen in the first embodiment of the present invention.
Fig. 6 is a second perspective view of the fixed die in the first embodiment of the present invention.
Fig. 7 is a cross-sectional view of a fixed platen in a second embodiment of the present invention.
Fig. 8 is a perspective view of a fixed die in a third embodiment of the present invention.
Fig. 9 is a perspective view of a fixed die in a fourth embodiment of the present invention.

### Best Mode for Carrying out the Invention

Hereinafter, embodiments of the present invention will be explained in detail with reference to the drawings. In this case, an injection molding machine as a molding machine is explained.

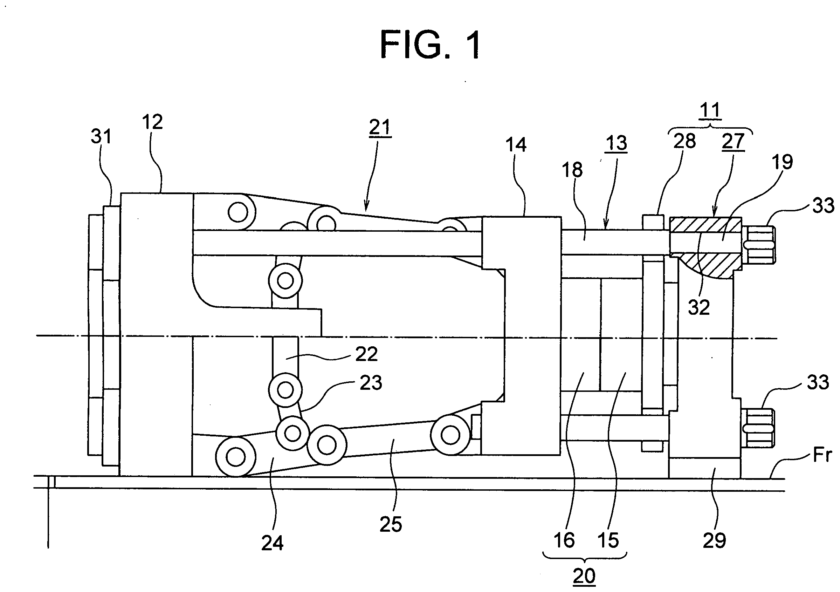

Fig. 1 is a diagram showing a main section of an injection molding machine in a first embodiment of the present invention.

In the drawing, Fr denotes a frame which supports the injection molding machine; 11, a fixed platen as a first support member and as a first mold holding member, which is mounted on the frame Fr; 12, a toggle support as a second support member, which is mounted on the frame Fr and disposed facing the fixed platen 11; 13, a tie bar as a connecting member, which is constructed so as to extend between the fixed platen 11 and the toggle support 12; and 14, a movable platen as a second mold holding member, which is disposed to face the fixed platen 11 and to be able to advance or retreat along the tie bar 13 between the fixed platen 11 and the toggle support 12. A fixed mold 15 as a first mold and a movable mold 16 as a second mold are mounted on the fixed platen 11 and the movable platen 14 so as to face each other. A mold device 20 is constituted by the fixed mold 15 and the movable mold 16. In addition, an injection device (not shown) is disposed adjacent to the fixed platen 11.

The fixed platen 11 includes a fixed die 27 as a mold die, which is a main body of the fixed platen 11, and a mold mounting die 28 which is disposed so as to be able to be mounted on or detached from the fixed die 27 and is for mounting the fixed mold 15, and is attached to the frame Fr by a fixing block 29.

In addition, the tie bars 13 are disposed at corner portions of the fixed platen 11, the toggle support 12, and the movable platen 14, that is, four corners (left and right end portions of an upper end and a lower end) of the fixed platen 11, the toggle support 12, and the movable platen 14. Also, the tie bar 13 has a main body portion 18 of the tie bar 13 and a penetration portion 19 which is made to be slightly smaller in diameter than the main body portion 18 at the end on the fixed platen 11 side, and a threaded portion (not shown) is formed at the leading end of the penetration portion 19. One end of the tie bar 13 can be mounted on the toggle support 12 by inserting the penetration portion 19 into a through-hole 32 from the front end face side of the fixed platen 11, making a stepped portion between the main body portion 18 and the penetration portion 19 touch an inner peripheral border of the through-hole 32 on the front end face, and then screwing a nut 33 to the threaded portion which protrudes from the back end face of the fixed platen 11.

A toggle mechanism 21 as a mold clamping force transmission device is disposed between the toggle support 12 and the movable platen 14, and the toggle mechanism 21 is made to be able to perform the mold closing, the mold clamping, or the mold opening by advancing or retreating a cross head 22 between the toggle support 12 side and the movable platen 14 side by a motor for mold clamping (not shown) as a driving section for mold clamping, thereby advancing or retreating the movable platen 14 along the tie bars 13, and thus bringing the movable mold 16 into contact with the fixed mold 15 or separating the movable mold 16 from the fixed mold 15.

To this end, the toggle mechanism 21 is constituted by a toggle lever 23 as a first link, which is supported so as to be able to swing with respect to the cross head 22, a toggle lever 24 as a second link, which is supported so as to be able to swing with respect to the toggle support 12, and a toggle arm 25 as a third link, which is supported so as to be able to swing with respect to the movable platen 14, and link coupling is made between the toggle lever 23 and the toggle lever 24 and between the toggle lever 24 and the toggle arm 25, respectively.

Also, a ball screw shaft (not shown) is supported so as to be able to rotate with respect to the toggle support 12, and a ball nut (not shown) mounted on the cross head 22 is screwed to the ball screw shaft. In order to rotate the ball screw shaft, the motor for mold clamping is mounted on the side of the toggle support 12, and the rotation of the motor for mold clamping is transmitted to the ball screw shaft.

Therefore, if the ball screw shaft is rotated by the driving of the motor for mold clamping, the rotational movement of the ball screw shaft is converted to the linear movement of the ball nut, so that the cross head 22 advances or retreats. That is, if the cross head 22 advances, the toggle mechanism 21 is extended, so that the movable platen 14 and the movable mold 16 are advanced, whereby the mold closing and the mold clamping are performed. At this time, a cavity space (not shown) is formed between the fixed mold 15 and the movable mold 16, and the cavity space is filled up with resin as a molding material, which is injected by the injection device.

In addition, the injection device includes a heating cylinder as a cylinder member and a screw as an injection member, which is disposed so as to be able to rotate and also advance or retreat in the heating cylinder, and in order to rotate or advance the screw, a motor for measuring as a driving section for measuring, a motor for injection as a driving section for injection, and the like are provided. Then, in a measuring process, if the screw rotates by the driving of the motor for measuring, resin is stored in front of the screw in the heating cylinder, and in an injection process, if the screw advances by the driving of the motor for injection, the stored resin is injected from an injection nozzle mounted on the front end of the heating cylinder, thereby filling up the cavity space.

Then, if the resin in the cavity space is cooled and solidified, a molded article is molded.

Subsequently, if the cross head 22 retreats, the toggle mechanism 21 is bent, so that the movable platen 14 and the movable mold 16 are retreated, whereby the mold opening is carried out. At this time, an ejector pin (not shown) as a projection member protrudes from the movable mold 16, so that the molded article attached to the movable mold 16 side is pushed and dropped.

A mold thickness adjustment device 31 is mounted on the toggle support 12 in order to change an effective length of the tie bar 13 in response to a thickness of the mold device 20 in a case where the mold device 20 is exchanged, or the like.

In this embodiment, the motor for mold clamping is provided in order to advance or retreat the cross head 22. However, a mold clamping cylinder is provided as the driving section for mold clamping, and the cross head 22 may also be advanced or retreated by the driving of the mold clamping cylinder. Also, in this embodiment, the toggle mechanism 21 is provided in order to advance or retreat the movable platen 14 and the movable mold 16. However, the movable platen 14 and the movable mold 16 may also be directly advanced or retreated by the mold clamping cylinder without using the toggle mechanism 21.

In addition, a mold clamping device is constituted by the fixed platen 11, the toggle support 12, the tie bar 13, the movable platen 14, the toggle mechanism 21, the nut 33, the motor for mold clamping, and the like. Also, a ball screw as a movement direction conversion section is constituted by the ball screw shaft and the ball nut, a first conversion element is constituted by the ball screw shaft, and a second conversion element is constituted by the ball nut.

Incidentally, if the mold clamping is performed at a given mold clamping force by advancing the movable platen 14 and the movable mold 16 by the operation of the mold clamping device, a force which draws the fixed platen 11 to the base plate 12 side through the tie bar 13 is generated. At this time, since the tie bars 13 are disposed at four corners of the fixed platen 11, four corners of the fixed platen 11 are drawn to the base plate 12 side, whereas the central portion of the fixed platen 11 is subjected to the mold clamping force through the movable mold 16 and the fixed mold 15, thereby being pushed in the opposite direction. In this case, if the fixed platen 11 is deformed and the fixed mold 15 is deformed accordingly, a gap is formed between the fixed mold 15 and the movable mold 16, and resin enters into the gap, thereby forming burrs, or resin leakage through the gap, that is, resin leakage occurs. Therefore, the quality of a molded article is lowered.

Also, since the tie bars 13 are bent in accordance with the deformation of the fixed platen 11, galling occurs in the nuts 33, so that durability of the mold device 20 is lowered, the movable platen 14 cannot be smoothly advanced or retreated along the tie bars 13, or operability of the mold device 20 is lowered.

Therefore, in this embodiment, as previously described, the fixed platen 11 is constituted by the fixed die 27 and the mold mounting die 28, and further, a given place of the fixed die 27 is reinforced by a rib or the like.

Next, the fixed platen 11 having the above-described configuration will be explained.

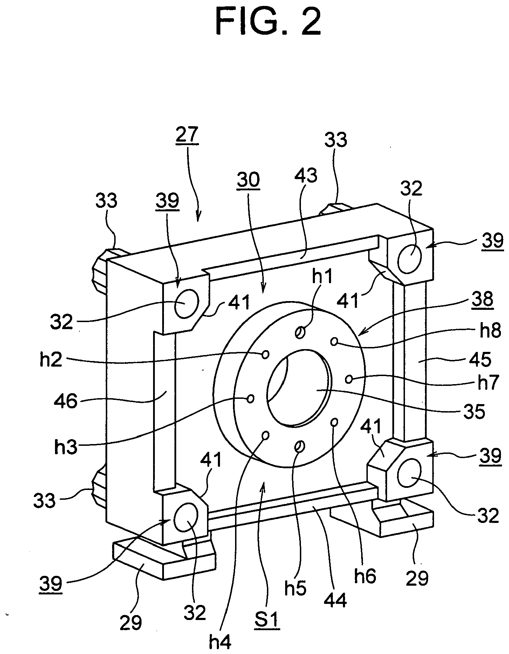

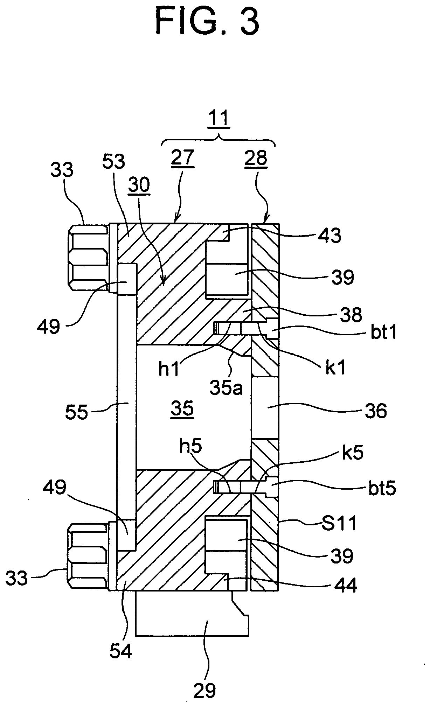

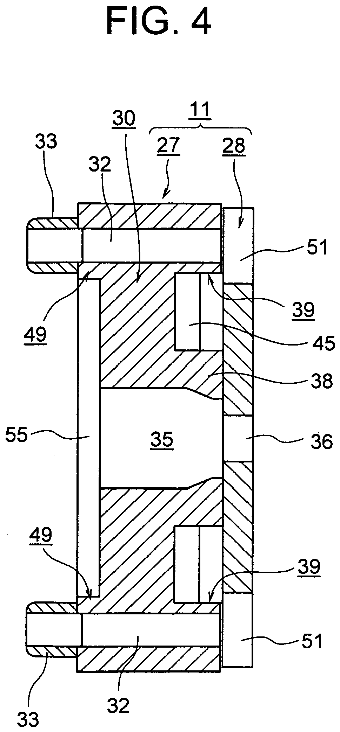

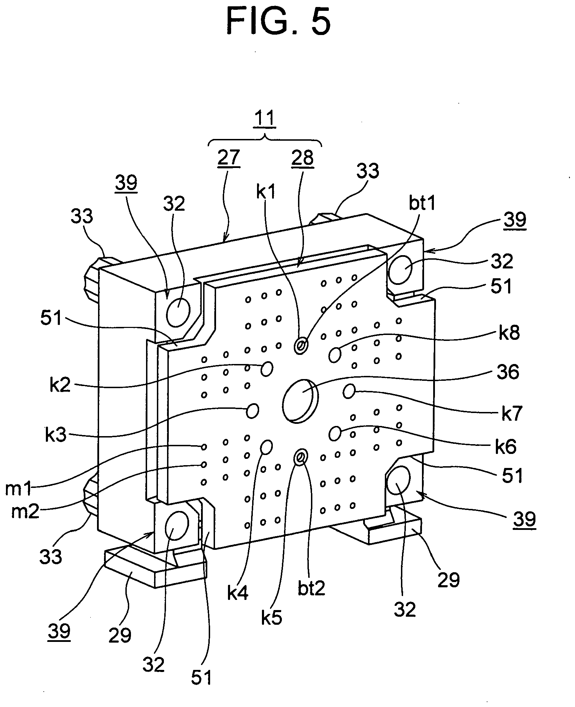

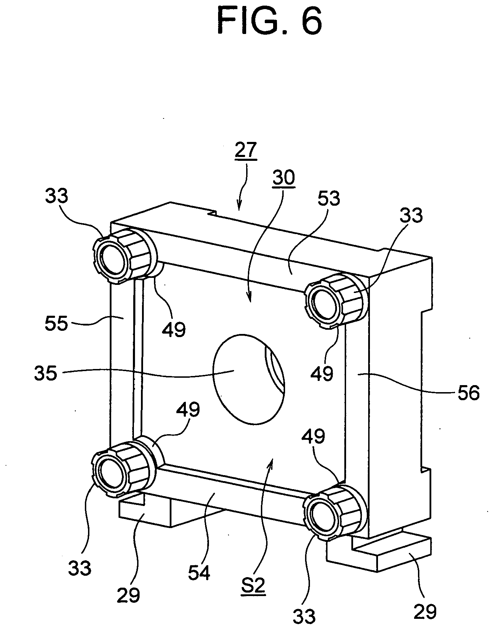

Fig. 2 is a first perspective view of the fixed die in the first embodiment of the present invention, Fig. 3 is a first cross-sectional view of the fixed platen in the first embodiment of the present invention, Fig. 4 is a second cross-sectional view of the fixed platen in the first embodiment of the present invention, Fig. 5 is a perspective view of the fixed platen in the first embodiment of the present invention, and Fig. 6 is a second perspective view of the fixed die in the first embodiment of the present invention. Also, in order to show arrangement states of the fixed die 27 and the fixed platen 11, in Figs. 2, 5, and 6 , besides the fixed die 27, the fixing blocks 29 and the nuts 33 are shown together, in Fig. 3 , besides the fixed platen 11, the fixing blocks 29 and the nuts 33 are shown together, and in Fig. 4 , besides the fixed platen 11, the nuts 33 are shown together.

In the drawings, reference numeral 11 denotes the fixed platen; 27, the fixed die; 28, the mold mounting die; and 29, the fixing block. Both the fixed die 27 and the mold mounting die 28 have a rectangular shape, and through-holes 35 and 36 are respectively formed at the central portions of the fixed die 27 and the mold mounting die 28 in order to make the injection nozzle (not shown) enter and to face the fixed mold 15. The diameter of the though-hole 36 is made to be smaller than the diameter of the though-hole 35, and a taper 35a is formed at a front end portion of an inner circumferential surface of the though-hole 35, so that the diameter is reduced as it gets closer to the through-hole 36.

At the central portion of a first face of a main body of the fixed die 27, that is, a die body 30, in this embodiment, a face S1 of the die body 30 on the side which faces the movable platen 14, an annular mounting portion 38 as a projecting portion is formed so as to project from the die body 30 toward the movable platen 14 side. In this case, the mounting portion 38 functions as a member which transmits a mold clamping force at the time of the mold clamping, that is, a mold clamping force transmission portion. Although in this embodiment the mounting portion 38 is formed into an annular shape, it does not necessarily need to be an annular shape.

Also, at four corners (left and right end portions of an upper end and a lower end) of the face S1, tie bar holding portions 39 each having an almost rectangular shape and surrounding the through-hole 32 are formed so as to project from the die body 30 toward the movable platen 14 side. Also, strip-shaped ribs 43 to 46 which connect the tie bar holding portions 39are formed in the up-and-down direction and the left-and-right direction at lateral portions distant from the mounting portion 38 by a given distance. In this embodiment, the ribs 43 to 46 are formed along edges, that is, an upper edge, a lower edge, a left edge (a left edge when viewed the movable platen 14 from the fixed platen 11), and a right edge (a right edge when viewing the movable platen 14 from the fixed platen 11) of the die body 30 so as to have a given width and project from the die body 30 toward the movable platen 14 side.

A taper portion 41 for preventing the mold mounting die 28 from interfering with the tie bar holding portion 39 when the mold mounting die 28 is mounted on or detached from the fixed die 27 is formed at the portion of each tie bar holding portion 39, which faces the mounting portion 38.

In addition, a first transverse rib extending in a transverse direction so as to connect the left and right tie bar holding portions 39 of the upper end is constituted by the rib 43, a second transverse rib extending in a transverse direction so as to connect the left and right tie bar holding portions 39 of the lower end is constituted by the rib 44, a first longitudinal rib extending in a longitudinal direction so as to connect the upper and lower tie bar holding portions 39 of the left end is constituted by the rib 45, and a second longitudinal rib extending in a longitudinal direction so as to connect the upper and lower tie bar holding portions 39 of the right end is constituted by the rib 46. In addition, a reinforcement portion of a central portion is constituted by the mounting portion 38, a reinforcement portion of each corner portion is constituted by each tie bar holding portion 39, and a reinforcement portion of each edge is constituted by each of the ribs 43 to 46.

In addition, at four corners (left and right end portions of an upper end and a lower end) of a second face of the die body 30, in this embodiment, a face S2 of the die body 30 on the side which faces the injection device, tie bar holding portions 49 each surrounding the through-hole 32 are formed so as to project from the die body 30 toward the injection device side. Also, strip-shaped ribs 53 to 56 which connect (at least two) tie bar holding portions 49 are formed along the edges, that is, the upper edge, the lower edge, the left edge (the left edge when viewing the movable platen 14 from the fixed platen 11), and the right edge (the right edge when viewing the movable platen 14 from the fixed platen 11) of the die body 30 so as to have a given width and project from the die body 30 toward the injection device side.

Each tie bar 13 (Fig. 1) extends through the through-hole 32 and is held by the tie bar holding portions 39 and 49.

In addition, a first transverse rib extending in a transverse direction so as to connect the left and right tie bar holding portions 49 of the upper end is constituted by the rib 53, a second transverse rib extending in a transverse direction so as to connect the left and right tie bar holding portions 49 of the lower end is constituted by the rib 54, a first longitudinal rib extending in a longitudinal direction so as to connect the upper and lower tie bar holding portions 49 of the left end is constituted by the rib 55, and a second longitudinal rib extending in a longitudinal direction so as to connect the upper and lower tie bar holding portions 49 of the right end is constituted by the rib 56. In addition, a reinforcement portion of each corner portion is constituted by each tie bar holding portion 49, and a reinforcement portion of each edge is constituted by each of the ribs 53 to 56.

The mold mounting die 28 is attached to the fixed die 27 by a plurality of, in this embodiment, eight, hexagon socket head bolts bti(i=1, 2, ..., 8) (in Figs. 3 and 5 , only two bolts bt1 and bt5 of the bolts bti are shown) as fixing elements at the mounting portion 38. To this end, mounting holes hi(i=1, 2, ..., 8) are formed at an equal pitch at a plurality of places in a circumferential direction at the face of the mounting portion 38, which faces the mold mounting die 28, through-holes ki(i=1, 2, ..., 8) are formed at the positions which are located outside in a radial direction from the through-hole 36 of the mold mounting die 28 and correspond to the mounting holes hi, and then the bolts bti are respectively screwed to the mounting holes hi through the through-holes ki. In addition, in a state where the bolts bti are screwed to the mounting holes hi, a head portion of each bolt bti is received in each through-hole ki so as not to protrude from a mold mounting face S11 of the mold mounting die 28.

Also, the mounting holes h1 and h5 and the through-holes k1 and k5 are formed at a plurality of preset positions, in this embodiment, two positions which are 180° apart, and the mold mounting die 28 can be positioned with respect to the fixed die 27 by inserting the bolts bt1 and bt5 into the mounting holes h1 and h5 through the through-holes k1 and k5. To this end, as the bolts bt1 and bt5, reamer bolts having a long non-threaded portion are used, and the bolts are fitted into the through-holes k1 and k5 and the mounting holes h1 and h5 by socket and spigot joints by the non-threaded portions. In addition, a first positioning element is constituted by the bolts bt1 and bt5, and a second positioning element is constituted by the mounting holes h1 and h5 and the through-holes k1 and k5.

Then, when a protrusion height of the mounting portion 38 from the face S1 is H1, a protrusion height of each tie bar holding portion 39 is H2, and a protrusion height of each of the ribs 43 to 46 is H3, the protrusion heights H1, H2, and H3 have the relationship of H1>H2>H3 such that the mold mounting die 28 does not come into contact with the tie bar holding portions 39 and the ribs 43 to 46 in a state where the mold mounting die 28 is mounted on the fixed die 27.

Further, in order not to make the mold mounting die 28 interfere with each tie bar 13 in a state where the mold mounting die 28 is mounted on the fixed die 27, cutout portions 51 having a rectangular shape are formed at four corners (left and right ends of the upper end and the lower end) of the mold mounting die 28.

In addition, dimensions of the cutout portion 51 and the tie bar holding portion 39 can be set such that the inner peripheral surface of each cutout portion 51 is located further inside than the outer peripheral surface of the tie bar holding portion 39 in a state where the mold mounting die 28 is mounted on the fixed die 27. In this case, it is possible to overlap the tie bar holding portion 39 and the cutout portion 51 in an axial direction and to make the protrusion heights H1, H2, and H3 have the relationship of H2>H1>H3.

Incidentally, the fixed mold 15 and the movable mold 16 are mounted on the mold mounting die 28 by mold mounting bolts (not shown) as fixing members. However, there is a case where positions at which the mold mounting bolts are arranged, that is, fixing positions of the mold device 20 are varied according to the kind of the mold device 20. Therefore, in this embodiment, a plurality of mold mounting holes mj (j=1, 2, ...) are formed in a matrix form and in a given pattern to correspond to each mold device 20, that is, the fixing positions of each mold device 20 such that various mold devices 20 can be mounted further outside in a radial direction than the respective through-holes ki of the mold mounting die 28. Therefore, since there is no restriction when exchanging the mold device 20, the general versatility of the mold clamping device can be increased.

In addition, in a case where the dimensions of the used mold mounting bolt vary according to the kind of the mold device 20, the mold mounting holes mj can be formed corresponding to the dimensions of the mold mounting bolt.

In this manner, in this embodiment, since the mounting portion 38, the tie bar holding portions 39, and the ribs 43 to 46 and 53 to 56 are formed at the fixed die 27, deformation of the fixed die 27 can be suppressed, so that deformation of the fixed platen 11 and the fixed mold 15 can be suppressed.

Therefore, since a gap is not formed between the fixed mold 15 and the movable mold 16, a problem in which resin enters into the gap, thereby forming burrs, or that leakage of resin through the gap occurs, does not arise. Therefore, the quality of a molded article can be sufficiently improved.

Also, since deformation of the fixed die 27 can be suppressed, bending of the tie bars 13 can be suppressed. That is, the fixed die 27 can be solidly formed such that when the largest mold clamping force is generated in accordance with the mold clamping and applied to the fixed die 27, the amount of deformation of the tie bar holding portion 39 in an axial direction of the tie bar 13, that is, a deformation amount, becomes equal to or less than 0.8 mm. As a result, galling does not occur in the nuts 33 for engaging the tie bars 13 with the fixed platen 11, so that durability of the mold device 20 can be improved. In addition, the movable platen 14 can smoothly advance or retreat along the tie bars 13, so that operability of the mold device 20 can be improved.

Also, even if the fixed die 27 is slightly deformed, since the mold mounting die 28 is fixed to the mounting portion 38, the mold mounting die 28 and the die body 30 are connected to each other through only the mounting portion 38. Therefore, it can be suppressed that stress generated in the fixed die 27 is transmitted to the mold mounting die 28. As a result, when the largest mold clamping force is generated in accordance with the mold clamping and applied to the fixed die 27, an angle of deformation of the mold mounting face S11 over a range from the center to the outer peripheral border, that is, an deformation angle, can be suppressed to a value equal to or less than 0.1°. Furthermore, since the mounting portion 38 is formed at a place distant from each tie bar holding portion 39 and the ribs 43 to 46, it can be suppressed that stress generated in the peripheral border portion of the fixed die 27 is transmitted to the mounting portion 38 and that it is further transmitted to the mold mounting die 28.

In this embodiment, the mold mounting die 28 is positioned with respect to the fixed die 27 by inserting the bolts bt1 and bt5 into the mounting holes h1 and h5 through the through-holes k1 and k5. However, the mold mounting die 28 may also be positioned with respect to the fixed die 27 without using the bolts bt1 and bt5.

Next, a second embodiment of the present invention will be explained which allows the mold mounting die 28 to be positioned with respect to the fixed die 27 without using the bolts bt1 and bt5. Incidentally, portions having the same structure as that of the first embodiment are designated with the same reference numerals, and with regard to the advantageous effects of the invention which result from the same structure, the advantageous effects of the first embodiment are adopted.

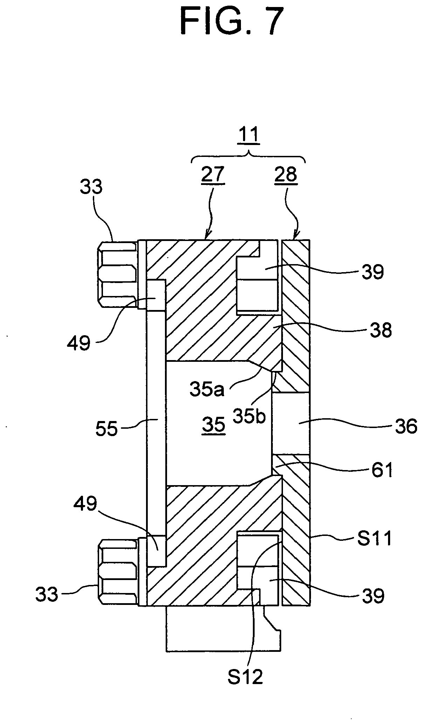

Fig. 7 is a cross-sectional view of a fixed platen in the second embodiment of the present invention. Incidentally, in order to show arrangement states of the fixed die 27 and the fixed platen 11, besides the fixed platen 11, the fixing block 29 and the nuts 33 are shown together.

In this case, an annular insertion portion 61 is formed so as to project toward the fixed die 27 side at the central portion of a face S12 of the mold mounting die 28, which faces the fixed die 27 as a mold die. Also, the taper 35a is formed at the front end portion of the inner circumferential surface of the through-hole 35 of the fixed die 27, and a fitting portion 35b is formed further in front than the taper 35a. The insertion portion 61 is fitted with respect to the fitting portion 35b by socket and spigot joint. The mold mounting die 28 can be positioned with respect to the fixed die 27 by fitting the insertion portion 61 into the through-hole 35. In addition, the first positioning element is constituted by the insertion portion 61, and the second positioning element is constituted by the through-hole 35.

In addition, in this embodiment, if the mold clamping is performed at the mold device 20, a mold clamping force is transmitted to the mold mounting die 28 through the fixed mold 15 (Fig. 1) as the first mold. At this time, the central portion of the mold mounting die 28 is directly supported by the annular mounting portion 38 as a projecting portion, whereas the peripheral border portion of the mold mounting die 28 is supported in a cantilever structure by the mounting portion 38. Accordingly, warp is often generated in the peripheral border portion of the mold mounting die 28 at the time of the mold clamping.

Therefore, a third embodiment of the present invention will be explained which can prevent warp from being generated in the peripheral border portion of the mold mounting die 28 at the time of the mold clamping.

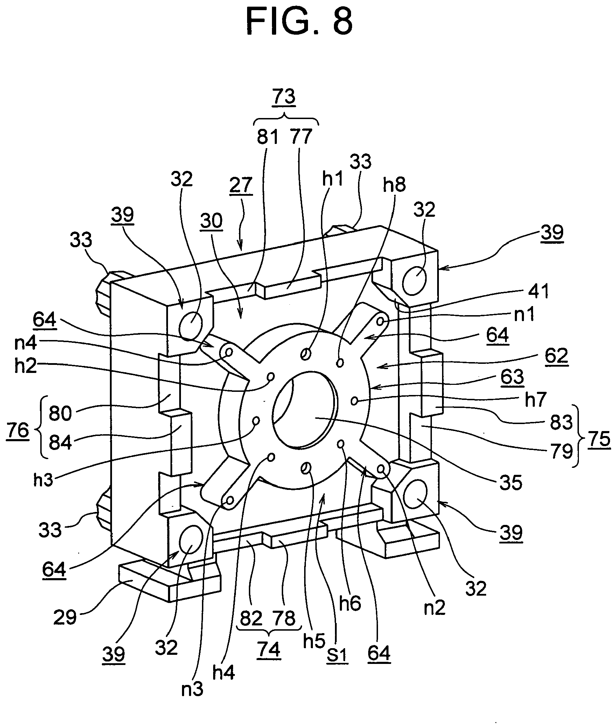

Fig. 8 is a perspective view of a fixed die in the third embodiment of the present invention. Incidentally, in order to show arrangement states of the fixed die 27 and the fixed platen 11, besides the fixed die 27, the fixing block 29 and the nuts 33 are shown together.

In the drawing, reference numeral 62 denotes an annular mounting portion as a projecting portion. The mounting portion 62 has an annular portion 63 formed so as to project from the die body 30 toward the movable platen 14 side, which is the second mold holding member, at the central portion of the face S1 of the die body 30 on the side which faces the movable platen 14, and radial portions 64 obliquely formed from the annular portion 63 toward the tie bar holding portions 39, and mounting holes n1 to n4 are formed at the respective radial portions 64. Also, through-holes (not shown) are formed at positions of the mold mounting die 28 (not shown), which correspond to the mounting holes n1 to n4, and bolts (not shown) are respectively screwed to the mounting holes n1 to n4 through the through-holes.

Also, at the upper edge, the lower edge, the left edge (the left edge when viewing the movable platen 14 from the fixed platen 11), and the right edge (the right edge when viewing the movable platen 14 from the fixed platen 11) of the face S1, strip-shaped ribs 73 to 76 are formed at a given width so as to project from the die body 30 toward the movable platen 14 side, and at the central portion in a longitudinal direction of each of the ribs 73 to 76, each of holding portions 77 to 80 for supporting the mold mounting die 28 is formed so as to further project toward the movable platen 14 side. In addition, the mounting portion 62 is formed at a place distant from each tie bar holding portion 39 and the ribs 73 to 76.

Then, when a protrusion height of the mounting portion 62 from the face S11 is H11, a protrusion height of each tie bar holding portion 39 is H12, a protrusion height of each of the holding portions 77 to 80 in the ribs 73 to 80 is H13, and a protrusion height of each of portions other than the holding portions 77 to 80 in the ribs 73 to 80, that is, a protrusion height of each of rib main body portions 81 to 84 is H14, the protrusion heights H11, H12, H13, and H14 have the relationship of H11=H13>H12>H14 such that in a state where the mold mounting die 28 is mounted on the fixed die 27, the mold mounting die 28 is supported by the mounting portion 62 and the holding portions 77 to 80 and the mold mounting die 28 does not come into contact with the tie bar holding portions 39 and the rib main body portions 81 to 84.

In this manner, since the mold mounting die 28 is supported by the mounting portion 62 and the holding portions 77 to 80 in a state where the mold mounting die 28 is mounted on the fixed die 27, when the mold clamping is performed at the mold device 20 (Fig. 1), even if the mold clamping force is transmitted to the mold mounting die 28 through the fixed mold 15 (Fig. 1), warp is not generated in the peripheral border portion of the mold mounting die 28.

In addition, in the first embodiment, the ribs 43 to 46 are formed along the upper edge, the lower edge, the left edge, and the right edge of the die body 30 and so as to face from the upper edge, the lower edge, the left edge, and the right edge to the inside. However, the ribs do not necessarily need to be formed so as to face from the upper edge, the lower edge, the left edge, and the right edge to the inside.

Next, a fourth embodiment of the present invention will be explained in which the ribs are formed further inside than the upper edge, the lower edge, the left edge, and the right edge of the die body 30, that is, on the mounting portion 38 side. Incidentally, portions having the same structure as that of the first embodiment are designated with the same reference numerals, and with regard to the advantageous effects of the invention which result from the same structure, the advantageous effects of the first embodiment are adopted.

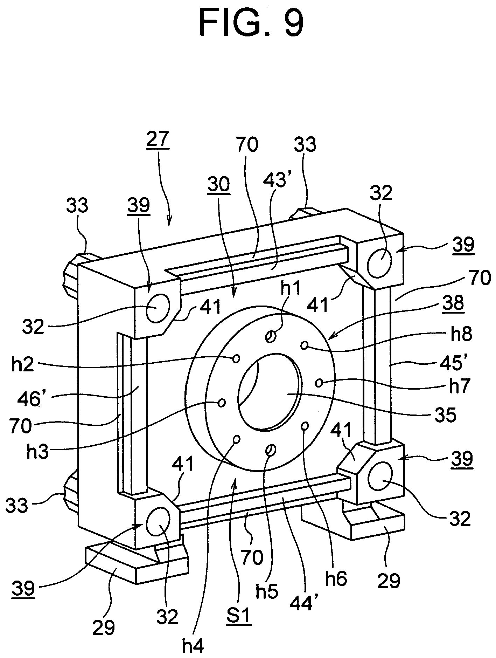

Fig. 9 is a perspective view of a fixed die in the fourth embodiment of the present invention.

In the drawing, reference numerals 43' to 46' denote ribs. The ribs 43' to 46' are formed further inside than the upper edge, the lower edge, the left edge (the left edge when viewing the movable platen 14 as the second mold holding member from the fixed platen 11 as the first support member and as the first mold holding member), and the right edge (the right edge when viewing the movable platen 14 from the fixed platen 11) of the die body 30, that is, at given positions on the mounting portion 38 side, which is a projecting portion, along the upper edge, the lower edge, the left edge, and the right edge so as to have a given width and face from the die body 30 toward the movable platen 14 side.

In this case, the reinforcement portions of the respective edges are constituted by the ribs 43' to 46'. Also, the first transverse rib is constituted by the rib 43', the second transverse rib is constituted by the rib 44', the first longitudinal rib is constituted by the rib 45', and the second longitudinal rib is constituted by the rib 46'.

In this embodiment, the ribs 43' to 46' are formed further on the mounting portion 38 side than the upper edge, the lower edge, the left edge, and the right edge of the die body 30, and a cutout portion 70 is formed between each rib and each of the upper, lower, left, and right edges, so that the weight of the die body 30 can be reduced accordingly.

In the respective embodiments, the fixed platen 11 is formed by the fixed die 27 and the mold mounting die 28. However, in a 2-plate type mold clamping device having only a fixed platen and a movable platen without being provided with a toggle plate, the movable platen is formed by a movable die as a mold die, and a mold mounting die, and the mold mounting die can be fixed to a mounting portion formed at the movable die. In this case, since the injection nozzle does not need to face the movable mold 16 (Fig. 1), the mounting portion does not need to be an annular shape, but may also be formed into a circular shape.

Also, in the respective embodiments, the mounting portions 38 and 62 are formed at the fixed die 27. However, the mounting portion as a projecting portion may also be formed at the mold mounting die 28, or the mounting portions as projecting portions may also be formed at both the fixed die 27 and the mold mounting die 28.

Further, each of the ribs 43 to 46, 43' to 46', 53 to 56, and 73 to 80 is formed at each edge of the upper, lower, left, and right edges of the die body 30 so as to continue along each edge. However, each rib may also be formed along each edge of the die body 30 so as to be located on a center side distant from each edge of the die body 30 by a given distance.

## Claims

1. A mold holding member comprising:
(a) a mold die (27) including a die body (30), a plurality of tie bar holding portions (39, 49) which are formed so as to project from the die body (30) at each corner portion of the die body (30), each of said tie bar holding portions (39, 49) being adapted for holding a tie bar (13), and a reinforcement portion (73-76) which connects two adjacent tie bar holding portions (39, 49) among the plurality of tie bar holding portions (39, 49) and is formed along an edge of the die body (30) so as to project from the die body(30);
(b) a mold mounting die (28) which is mounted on the mold die (27) and includes a mold mounting face for mounting a mold (20); and
(c) a projecting portion (38, 62) which is formed on at least one of the mold die (27) and the mold mounting die (28);
wherein the mold die (27) and the mold mounting die (28) are connected to each other through the projecting portion (38, 62); and
wherein the reinforcement portion (73-76) includes a holding portion (77, 78, 83, 84) for supporting the mold mounting die (28).

2. The mold holding member according to Claim 1, wherein the tie bar holding portion (39) and the reinforcement portion (73-76) are formed at a first face (S1) of the die body (30).

3. The mold holding member according to Claim 1, wherein the tie bar holding portion (39) and the reinforcement portion (73-76) are formed at each of a first and second face (S1, S2) of the die body (30).

4. The mold holding member according to Claim 1, wherein a protrusion height of the tie bar holding portion (39) from the die body (30) is larger than a protrusion height of the reinforcement portion (73-76) from the die body (30).

5. The mold holding member according to Claim 1, wherein the reinforcement portion (73-76) is formed inside a radial edge of the die body (30) so as to project axially from the die body (30).

6. The mold holding member according to any one of Claims 1 to 5, wherein the mold mounting die (28) includes a plurality of mold mounting holes (mj) formed corresponding to a mold device.

7. The mold holding member according to any one of Claims 1 to 5, wherein the mold mounting die (28) is detachably disposed on the mold die (27).

8. The mold holding member according to any one of Claims 1 to 5, wherein a cutout portion (51) is formed in the mold mounting die (28) to prevent the mold mounting die (28) from interfering with the tie bar (13).

9. A mold holding member according to any one Claims 1 to 8, wherein the mold mounting die (28) is joined to the die body (30) at a central portion of the die body (30).

10. A mold clamping device comprising the mold holding member according to any one of Claims 1 to 9.

## Patentansprüche

1. Formhalteglied, das Folgendes aufweist:
(a) ein Formwerkzeug (27), das einen Werkzeugkörper (30), eine Vielzahl von Führungssäulenhalteteilen (39, 49), die so gebildet sind, dass sie von dem Werkzeug körper (30) bei jedem Eckenteil des Werkzeug körpers (30) vorragen, wobei jeder der Führungssäulenhalteteile (39, 49) ausgebildet ist, um eine Führungssäule zu halten, sowie einen Aussteifungsteil (73-76) aufweist, der zwei benachbarte Führungssäulenhalteteile (39, 49) innerhalb der Vielzahl von Führungssäulenhalteteilen (39, 49) verbindet, und der entlang einer Kante des Werkzeugkörpers (30) so gebildet ist, dass er von dem Werkzeugkörper (30) vorragt;
(b) ein Formanbringungswerkzeug (28), das an dem Formwerkzeug (27) angebracht ist und eine Formanbringungsoberfläche zur Anbringung einer Form (20) aufweist; und
(c) einen vorragenden Teil (38, 62), der auf dem Formwerkzeug (27) und/oder dem Formanbringungswerkzeug (28) gebildet ist;
wobei das Formwerkzeug (27) und das Formanbringungswerkzeug (28) miteinander durch den vorragenden Teil (38, 62) verbunden sind; und
wobei der Aussteifungsteil (73-76) einen Halteteil (77, 78, 83, 84) zur Unterstützung des Formanbringungswerkzeugs (28) aufweist.

2. Formhalteglied gemäß Anspruch 1, wobei der Führungssäulenhalteteil (39) und der Aussteifungsteil (73-76) bei einer ersten Fläche (S1) des Werkzeugkörpers (30) gebildet ist.

3. Formhalteglied gemäß Anspruch 1, wobei der Führungssäulenhalteteil (39) und der Aussteifungsteil (73-76) bei sowohl einer ersten als auch zweiten Fläche (S1, S2) des Werkzeugkörpers (30) gebildet sind.

4. Formhalteglied gemäß Anspruch 1, wobei eine Vorsprungshöhe des Führungssäulenhalteteils (39) von dem Werkzeugkörper (30) größer als eine Vorsprungshöhe des Aussteifungsteils (73-76) von dem Werkzeugkörper (30) ist.

5. Formhalteglied gemäß Anspruch 1, wobei der Aussteifungsteil (73-76) innerhalb einer radialen Kante des Werkzeugkörpers (30) so gebildet wird, dass er axial von dem Werkzeugkörper (30) vorragt.

6. Formhalteglied gemäß einem der Ansprüche 1 bis 5, wobei das Formanbringungswerkzeug (28) eine Vielzahl von Formanbringungslöchern (mj) aufweist, die entsprechend einer Formvorrichtung gebildet sind.

7. Formhalteglied gemäß einem der Ansprüche 1 bis 5, wobei das Formanbringungswerkzeug (28) in lösbarer Weise auf dem Formwerkzeug (27) angeordnet ist.

8. Formhalteglied gemäß einem der Ansprüche 1 bis 5, wobei ein Aussparungsteil (51) in dem Formanbringungswerkzeug (28) gebildet ist, um zu verhindern, dass das Formanbringungswerkzeug (28) die Führungssäule (13) beeinträchtigt.

9. Formhalteglied gemäß einem der Ansprüche 1 bis 8, wobei das Formanbringungswerkzeug (28) mit dem Werkzeugkörper (30) bei einem zentralen Teil des Werkzeugkörpers (30) verbunden wird.

10. Formklemmvorrichtung, die das Formhalteglied gemäß einem der Ansprüche 1 bis 9 aufweist.

## Revendications

1. Élément support de moule, comprenant :
(a) une matrice de moulage (27) comprenant un corps de matrice (30), une pluralité de portions supports de barre de liaison (39, 49) qui sont formées de manière à être saillantes à partir du corps de matrice (30) au niveau de chaque portion de coin du corps de matrice (30), chacune des portions supports de barre de liaison (39, 49) étant adaptée pour tenir une barre de liaison (13), et une portion de renfort (73-76) qui connecte deux portions supports de barre de liaison adjacentes (39, 49) parmi la pluralité de portions supports de barre de liaison (39, 49) et est formée le long d'un bord du corps de matrice (30) de manière à être saillante à partir du corps de matrice (30) ;
(b) une matrice de montage de moule (28) qui est montée sur la matrice de moulage (27) et qui comprend une face de montage de moule pour monter un moule (20) ; et
(c) une portion saillante (38, 62) qui est formée sur au moins l'une de la matrice de moulage (27) et de la matrice de montage de moule (28) ;
dans lequel la matrice de moulage (27) et la matrice de montage de moule (28) sont connectés entre elles par l'intermédiaire de la portion saillante (38, 62) ; et
dans lequel la portion de renfort (73-76) comprend une portion support (77, 78, 83, 84) pour supporter la matrice de montage de moule (28).

2. Élément support de moule selon la revendication 1, dans lequel la portion support de barre de liaison (39) et la portion de renfort (73-76) sont formées au niveau d'une première face (S1) du corps de matrice (30).

3. Élément support de moule selon la revendication 1, dans lequel la portion support de barre de liaison (39) et la portion de renfort (73-76) sont formées au niveau de chacune d'une première et d'une deuxième face (S1, S2) du corps de matrice (30) .

4. Élément support de moule selon la revendication 1, dans lequel la hauteur de protubérance de la portion support de barre de liaison (39) par rapport au corps de matrice (30) est plus grande que la hauteur de protubérance de la portion de renfort (73-76) par rapport au corps de matrice (30).

5. Élément support de moule selon la revendication 1, dans lequel la portion de renfort (73-76) est formée à l'intérieur d'un bord radial du corps de matrice (30) de manière à faire saillie axialement à partir du corps de matrice (30).

6. Élément support de moule selon l'une quelconque des revendications 1 à 5, dans lequel la matrice de montage de moule (28) comprend une pluralité de trous de montage de moule (mj) formés en correspondance avec un dispositif de moulage.

7. Élément support de moule selon l'une quelconque des revendications 1 à 5,
dans lequel la matrice de montage de moule (28) est disposée de manière amovible sur la matrice de moulage (27).

8. Élément support de moule selon l'une quelconque des revendications 1 à 5,
dans lequel une portion découpée (51) est formée dans la matrice de montage de moule (28) pour empêcher la matrice de montage de moule (28) d'interférer avec la barre de liaison (13).

9. Élément support de moule selon l'une quelconque des revendications 1 à 8, dans lequel la matrice de montage de moule (28) est reliée au corps de matrice (30) au niveau d'une portion centrale du corps de matrice (30).

10. Dispositif de serrage de moule comprenant l'élément support de moule selon l'une quelconque des revendications 1 à 9.
